# EUROPÄISCHE PATENTANMELDUNG

(11) **EP 4 502 094 A1**
(43) Veröffentlichungstag der Anmeldung: **05.02.2025**
(21) Anmeldenummer: 23189519.4
(22) Anmeldetag: 03.08.2023
(51) Int. Cl.: C09J 5/00

(54) **VERBINDUNGSVORRICHTUNG**

(71) Anmelder: Technische Universität Darmstadt, 64289 Darmstadt (DE); quintessence design GbR, 70597 Stuttgart (DE); GarnTec GmbH, 67468 Neidenfels (DE); Deutsche Institute für Textil- und Faserforschung Denkendorf, 73770 Denkendorf (DE)
(72) Erfinder: Götzinger, Robert, 64287 Darmstadt (DE); Schabel, Samuel, 64297 Darmstadt (DE); Gerd, Martin, 67473 Lindenberg (DE); Haigis, Kathrin, 70771 Leinfelden-Echterdingen (DE); Finckh, Viola, 72649 Wolfschlugen (DE); Schairer, Karl-Friedrich, 70597 Stuttgart (DE); Heeb, Nathalie, 70597 Stuttgart (DE); Riethmüller, Christoph, 71229 Leonberg (DE)
(74) Vertreter: LifeTech IP Spies & Behrndt Patentanwälte PartG mbB

(57) **Zusammenfassung**

Eine Verbindungsvorrichtung (100) umfasst eine erste Verbindungskomponente (110) mit einem ersten Bereich (113); eine zweite Verbindungskomponente (120) mit einem zweiten Bereich (123); und ein Verbindungsmaterial (130), das Fasern (131) aufweist, um basierend auf den Fasern (131) ein Fluid (50) aufzunehmen und dadurch aufzuquellen. Der zweite Bereich (123) umschließt den ersten Bereich (113) und das Verbindungsmaterial (130) ist zwischen dem ersten Bereich (113) und dem zweiten Bereich (123) angeordnet, so dass das Verbindungsmaterial (130) nach einem Einbringen des Fluids (50) eine Verbindung zwischen der ersten Verbindungskomponente (110) und der zweiten Verbindungskomponente (120) bewirkt.

## Beschreibung

Die vorliegende Erfindung bezieht sich auf eine Verbindungsvorrichtung, ein Verfahren zum Verbinden einer ersten Verbindungskomponente mit einer zweiten Verbindungskomponente, und insbesondere auf eine reibkraftschlüssige Verbindung von Rohren oder Hülsen aus Papier durch Superabsorberband.

### HINTERGRUND

Zum Verbinden von Bau- oder anderen Konstruktionsteilen sind verschiedene Methoden des Zusammenfügens bekannt. Dabei lassen sich formschlüssige Verbindungen, bei denen die jeweiligen Verbindungskomponenten ineinandergreifen, reib- oder andere kraftschlüssige Verbindungen, bei denen Normalkräfte auf verbindende Flächen wirken, und stoffschlüssige Verbindungen, die zwischen Verbindungskomponenten durch atomare oder molekulare Kräfte bestehen, unterscheiden. Für form- und reibkraftschlüssige Verbindungen können Hilfsfügemittel wie Schrauben, Nägel, Nieten oder Klebstoffe verwendet werden, wobei Klebstoffe oft bzw. überwiegend für stoffschlüssige Verbindungen eingesetzt werden.

Für Bau- und andere Konstruktionszwecke verhältnismäßig wenig erforscht sind Verbindungen, deren Komponenten aus Papier oder einem ähnlichen Faserstoff bestehen. In vielen Hinsichten ist Papier für konstruktive Zwecke geeignet; es findet zudem bereits vielseitig Anwendung und ist weit verbreitet. Unbehandeltes Papier ist allerdings hygroskopisch, nimmt also Feuchtigkeit aus der Umgebung auf. Papier kann jedoch auch hydrophobisiert werden, sodass die Feuchtigkeitsaufnahme kein Problem mehr darstellt. Durch Feuchtigkeit verliert Papier an Festigkeit und wird dehnbarer. Steckverbindungen von Rohren oder Hülsen aus Papier sind daher nur bedingt umsetzbar; vielmehr ist es - zumindest für unbehandeltes Papier - aufwendig, die Verbindung trocken zu halten und etwa einen ausreichenden Reibkraftschluss zu gewährleisten. Im Stand der Technik werden als Hilfsfügemittel für solche Verbindungen zumeist Klebstoffe eingesetzt. Diese Verbindungen können in der Regel nicht wieder gelöst werden. Zudem können die Bereiche, in denen die Verbindungskomponenten zusammengefügt sind, durch die ausgehärteten bzw. getrockneten Klebstoffe an Flexibilität verlieren.

Es besteht ein Bedarf nach einer Verbindung von Verbindungskomponenten aus allgemeinen Bau- oder Konstruktionsstoffen, und insbesondere aus Papier oder ähnlichen Faserstoffen, die zumindest bedingt lösbar ist, auch bei Umgebungsfeuchtigkeit stabil bleibt und eine Flexibilität der Verbindungskomponenten im Verbindungsbereich möglichst erhält.

### KURZBESCHREIBUNG DER ERFINDUNG

Ein Beitrag zur Lösung der obengenannten Probleme wird durch eine Verbindungsvorrichtung nach Anspruch 1 und ein Verfahren zum Verbinden einer ersten Verbindungskomponente mit einer zweiten Verbindungskomponente nach Anspruch 12 erreicht. Die abhängigen Ansprüche beziehen sich auf vorteilhafte Weiterbildungen der Gegenstände der unabhängigen Ansprüche.

Die vorliegende Erfindung bezieht sich auf eine Verbindungsvorrichtung, die eine erste Verbindungskomponente mit einem ersten Bereich und eine zweite Verbindungskomponente mit einem zweiten Bereich sowie ein Verbindungsmaterial umfasst, das Fasern aufweist und ausgebildet ist, um basierend auf den Fasern ein Fluid aufzunehmen und dadurch aufzuquellen. Dabei umschließt der zweite Bereich den ersten Bereich, und das Verbindungsmaterial ist zwischen dem ersten Bereich und dem zweiten Bereich angeordnet, so dass das Verbindungsmaterial nach einem Einbringen des Fluids basierend auf einem Aufquellen eine Verbindung zwischen der ersten Verbindungskomponente und der zweiten Verbindungskomponente bewirkt.

Die Verbindungsvorrichtung kann weitere Verbindungskomponenten umfassen.

Der erste Bereich und der zweite Bereich sind jeweils ein Teil der ersten bzw. der zweiten Verbindungskomponente. Der zweite Bereich kann beispielsweise einen Hohlraum, ein Durchbruch, eine Mulde, eine Bohrung oder ein Sackloch der zweiten Verbindungskomponente sein, oder zwei oder mehr bewegliche Teile umfassen, die ausgebildet sind, um in einer bestimmten Position eine geeignete Struktur auszubilden, die den ersten Bereich umschließen kann. Der erste Bereich kann ebenfalls hohl, aber insbesondere auch massiv ausgeführt sein.

Das Verbindungsmaterial kann Fasern verschiedener Art umfassen. Insbesondere kann es Fasern einer ersten Art in einem bestimmten ersten Längenbereich und Fasern einer zweiten Art in einem bestimmten zweiten Längenbereich umfassen. Die Fasern können Kunst- oder Naturfasern sein.

In Ausführungsbeispielen kann ein Aufnehmen des Fluids durch das Verbindungsmaterial zumindest teilweise dadurch bedingt sein, dass die Fasern ausgebildet sind, um das Fluid zu absorbieren. Somit kann das Verbindungsmaterial ausgebildet sein, um zumindest zu einem Teil durch ein Aufquellen der Fasern aufzuquellen.

In diesen oder weiteren Ausführungsbeispielen kann ein Aufnehmen des Fluids durch das Verbindungsmaterial auch zumindest teilweise durch ein Einlagern des Fluids zwischen den Fasern erfolgen. Die Fasern können eine Anordnung bilden, die ausgebildet ist, um das Fluid in Zwischenräumen der Anordnung einzulagern. Die Fasern können dazu geordnet und/oder ungeordnet (ohne eine Vorzugsrichtung) eine Matrix bilden. Das Verbindungsmaterial kann als ein Vlies oder ein Garn ausgeführt sein.

Das Verbindungsmaterial kann auch einen Zusatzstoff aufweisen, der zwischen den Fasern eingelagert ist und durch die Fasern gehalten wird. Der Zusatzstoff kann durch eine ihn umgebende Matrix von Fasern gehalten werden. Der Zusatzstoff kann ebenfalls ausgebildet sein, um das Fluid zu absorbieren und so ein Aufquellen des Verbindungsmaterials zumindest mitzubewirken. Dabei kann der Zusatzstoff die Fasern gegen den ersten Bereich und den zweiten Bereich pressen, um so eine Reibungskraft zwischen dem Verbindungsmaterial und der ersten und zweiten Verbindungskomponente zu vergrößern.

Das Verbindungsmaterial kann insbesondere noch ohne das Fluid, oder ohne eine für ein angestrebtes Aufquellen ausreichende Menge des Fluids, zwischen der ersten und der zweiten Verbindungskomponente angeordnet sein, und in diesem Zustand die erste und die zweite Verbindungskomponente lediglich locker bzw. durch eine verhältnismäßig geringe Kraft lösbar verbinden. Ein Einbringen des Fluids kann sodann passiv beispielsweise durch Absorption aus einer Umgebung der Verbindungsvorrichtung oder aus der ersten und/oder zweiten Verbindungskomponente erfolgen. Das Einbringen des Fluids kann alternativ oder zusätzlich aktiv, etwa durch Tränken oder Einspritzen, erfolgen. Durch das Einbringen des Fluids quillt das Verbindungsmaterial auf, so dass bei einem gleichbleibenden oder sich nur geringfügig ändernden Volumen zwischen dem ersten und dem zweiten Bereich ein Druck ansteigt, und schließlich eine durch das Verbindungsmaterial vermittelte Kraft zwischen dem ersten und dem zweiten Bereich die Verbindung in einem höheren Maß stärkt bzw. stabilisiert. Hat das Verbindungsmaterial ausreichend Fluid aufgenommen bzw. ist es ausreichend aufgequollen, so besteht die Verbindung zwischen der ersten und der zweiten Verbindungskomponente.

Das Verbindungsmaterial kann auch ausgebildet sein, um eine abdichtende Wirkung gegenüber dem Fluid zu haben. So kann es beispielsweise zunächst das Fluid aus einer äußeren Umgebung der Verbindungsvorrichtung oder aus einem Inneren zumindest einer Verbindungskomponente aufnehmen, dadurch aufquellen und so ein weiteres Eindringen des Fluids zwischen den ersten und den zweiten Bereich oder ein Durchfließen des Fluids zwischen dem ersten und zweiten Bereich verhindern. Entsprechend kann das Verbindungsmaterial auch ausgebildet sein, um eine abdichtende Wirkung gegenüber einem anderen Fluid (z.B. Luft oder einem anderen Gas) zu haben. Das Verbindungsmaterial kann somit ausgebildet sein, um nach dem Einbringen des Fluids die Verbindung gegen das Fluid und/oder gegen das andere Fluid abzudichten.

Optional ist die Verbindung eine reibkraftschlüssige Verbindung, eine formschlüssige Verbindung oder auch eine Mischung aus reibkraftschlüssiger und formschlüssiger Verbindung. Die Art der Verbindung kann durch eine Wahl der Fasern und ihre Anordnung beeinflusst werden. Eine Stärke des Reibkraftschlusses kann beispielsweise durch eine Rauheit der Fasern beeinflusst werden. Eine Stärke des Formschlusses kann beispielsweise durch eine Reißfestigkeit der Fasern beeinflusst werden. Die Fasern können ungeordnet vorliegen, beispielsweise in Form eines Vlieses. Die Fasern können auch angeordnet vorliegen, beispielsweise mit einer Vorzugsrichtung und/oder in Form eines Garns. Auch Zusatzstoffe können die Art der Verbindung beeinflussen.

Optional umfassen die Fasern Cellulosefasern, und insbesondere Papierfasern. Alternativ oder zusätzlich umfassen die Fasern Textilfasern. In vorteilhaften Ausführungsbeispielen umfassen die Fasern Papierfasern in einem ersten Längenbereich und Textilfasern in einem zweiten Längenbereich, wobei der zweite Längenbereich Längen oberhalb des ersten Längenbereichs umfasst. Alternativ oder zusätzlich umfassen die Fasern andere Naturfasern. Naturfasern können insbesondere Fasern pflanzlichen oder tierischen Ursprungs sein.

Naturfasern können leicht verfügbar, generell günstig und reiß- und absorptionsfähig sein. Sie können, insbesondere nach dem Aufnehmen des Fluids, eine hohe Reibungskraft zwischen dem Verbindungsmaterial und der ersten und zweiten Verbindungskomponente bewirken. Zusätzlich vorteilhaft gegenüber Kunst- bzw. Chemie- oder anorganischen Fasern kann sein, dass die Naturfasern umweltverträglicher hergestellt und/oder abgebaut werden können.

Optional weist das Fluid Wasser oder ein anders hydrophiles Fluid auf. Insbesondere kann es sich bei dem Fluid um Wasser handeln, das aus der ersten Verbindungskomponenten, aus der zweiten Verbindungskomponente und/oder aus einer Umgebung der Verbindungsvorrichtung, beispielsweise aus der Luft, aufgenommen bzw. absorbiert wird. Das Verbindungsmaterial kann durch das Aufnehmen des Wassers ein Trocknen der ersten und/oder zweiten Verbindungskomponente fördern.

Alternativ oder zusätzlich kann das Fluid ein Öl umfassen. Öl kann insbesondere vorteilhaft ein, wenn das Verbindungsmaterial auch einen Zusatzstoff umfasst, der Öl absorbiert und dabei aufquillt.

Optional hat der erste und/oder der zweite Bereich die Form einer Röhre. Die Röhre kann die Form eines Zylindermantels aufweisen. Die Röhre kann allerdings auch einen anderen als einen runden Querschnitt aufweisen.

Alternativ oder zusätzlich hat der erste und/oder der zweite Bereich die Form eines Zylinders. Beispielsweise kann der erste Bereich massiv ausgeführt sein. Auch der zweite Bereich kann massiv ausgeführt sein. Beispielsweise kann ein Loch in der zweiten Verbindungskomponente zu einer Aufnahme des ersten Bereichs ausgebildet sein. Wiederum kann ein Querschnitt eine andere Form als die einer Kreisscheibe aufweisen.

Alternativ oder zusätzlich weisen der erste und/oder der zweite Bereich ein Gewinde auf. Insbesondere kann der erste Bereich ein Außengewinde und der zweite Bereich ein entsprechendes Innengewinde aufweisen.

Alternativ oder zusätzlich hat insbesondere der erste Bereich die Form eines Keils, ist also mit einem Winkel angeschrägt. Die Verbindung kann somit eine Keilverbindung sein. Die Verbindung kann z.B. eine Welle-Nabe-Verbindung sein.

Optional weisen der erste Bereich und/oder der zweite Bereich zumindest eines der folgenden Materialien auf: ein Papier oder ein anderes Vlies aus Cellulosefasern, ein Holz, ein Metall, Chemiefasern, Kunstfasern, eine Keramik bzw. einenkeramischen Werkstoff oder einen Kunststoff. In vorteilhaften Ausführungsbeispielen kann das Verbindungsmaterial das Fluid ganz oder teilweise aus der ersten und/oder zweiten Verbindungskomponente bzw. aus dem ersten und/oder zweiten Bereich aufnehmen. Insbesondere kann das Verbindungsmaterial ausgebildet sein, um ein Trocknen der ersten und/oder der zweiten Verbindungskomponente zu fördern. Dies kann insbesondere der Fall sein, wenn zumindest der erste und/oder der zweite Bereich Papier oder andere Vliese aus Cellulose umfasst oder ganz aus einem oder mehreren solchen Materialien besteht. Vorteilhafte Ausführungsbeispiele weisen insbesondere Hülsen oder Rohre aus Papier als Verbindungskomponenten auf.

Optional weist der erste Bereich und/oder der zweite Bereich zumindest eine Öffnung auf, die ausgebildet ist, um das Fluid in das Verbindungsmaterial einzubringen. Die Öffnung kann insbesondere ausgebildet sein, um das Fluid nachträglich, also wenn der zweite Bereich den ersten Bereich bereits umschließt, in das Verbindungsmaterial einzubringen. In Ausführungsbeispielen der Verbindungsvorrichtung ist das Verbindungsmaterial zwischen dem ersten Bereich und dem zweiten Bereich noch ohne Fluid angeordnet. Durch die zumindest eine Öffnung kann dann das Fluid in das Verbindungsmaterial eingebracht werden.

Durch eine Wahl einer Form und/oder einer Anordnung der Öffnungen kann das Aufnehmen des Fluids insbesondere aus einer (äußeren oder inneren) Umgebung der Verbindungsvorrichtung gefördert werden. Eine Größe bzw. ein Durchmesser der zumindest einen Öffnung kann an Eigenschaften des Fluids wie z.B. eine Teilchengröße, einen Aggregatszustand oder eine charakteristische Temperatur angepasst sein. Ein Durchmesser der Öffnung kann variabel (z.B. konisch zulaufend) sein, um das Aufnehmen des Fluids gegenüber einem Abgeben (z.B. Verdunsten) des Fluids aus dem Verbindungsmaterial zu unterdrücken. In Ausführungsbeispielen kann ein Sieb oder eine siebartige Struktur, also eine hohe Zahl gegenüber einer Ausdehnung des zweiten Bereich jeweils relativ kleiner Öffnungen, vorhanden sein. Sind zwei oder mehr Öffnungen vorhanden, können die Öffnungen jeweils unterschiedliche Formen aufweisen.

Optional umfasst das Verbindungsmaterial einen Superabsorber, der ausgebildet ist, um das Fluid zu absorbieren. Der Superabsorber kann ein superabsorbierendes Polymer sein, also ein Kunststoff, der ausgebildet ist, um ein Vielfaches seines Eigengewichts an Fluid zu absorbieren. Der Superabsorber kann durch die Fasern im Verbindungsmaterial gehalten werden. Insbesondere kann er in die Fasern eingelagert sein. Im Stand der Technik sind Superabsorber für Wasser oder andere polare Flüssigkeiten, aber auch für Öl bekannt.

In Ausführungsbeispielen entzieht der Superabsorber zum einen einer Umgebungsluft, zum anderen aber auch umgebendem Papier (im ersten bzw. zweiten Bereich der Verbindungskomponenten) Wasser, quillt auf und führt dadurch zu einem Reibkraftschluss zwischen den Verbindungskomponenten.

Der Superabsorber kann beispielsweise ein Copolymer aus Acrylsäure oder Natriumacrylat sowie Acrylamid sein. Der Suprabsorber kann auch andere vernetzte polare Polymere umfassen, beispielsweise Polyacrylsäure, Polyacrylamid, Polyvinylpyrrolidon, Amylopektin, Gelatine oder Cellulose. Der Superabsorber kann einen Kernvernetzer (Core-Cross-Linker, CXL) aufweisen, der die Polymere stellenweise untereinander durch chemische Brücken verbindet. Der Superabsorber kann zudem einen Oberflächen-Nachvernetzer (Surface-Cross-Linker, SXL) aufweisen, der ausgebildet ist, um den Superabsorber im aufgequollenen Zustand auch bei äußerer Belastung zusammenzuhalten. Ein Aufquellen des Superabsorbers kann durch eine entsprechende Wahl des Superabsorbers beeinflusst werden.

Optional sind im Verbindungsmaterial die Fasern und der Superabsorber getrennt in abwechselnden Zonen angeordnet. In Ausführungsbeispielen bilden die Fasern und der Superabsorber abwechselnde Schichten. Die Zonen können allerdings auch anders konfiguriert und angeordnet sein.

Optional ist der Superabsorber im Verbindungsmaterial in einer Matrix aus Fasern angeordnet bzw. eingebettet. Die Matrix aus Fasern kann ausgebildet sein, um bei einem Aufquellen des Superabsorbers intakt zu bleiben. Die Matrix aus Fasern kann aber auch ausgebildet sein, um bei einem Aufquellen des Superabsorbers ganz oder teilweise zu reißen.

Durch einen Druck, den der aufgequollene Superabsorber auf die (ggf. ebenfalls aufgequollenen) Fasern ausübt, können die Fasern ganz oder teilweise gegen den ersten und/oder den zweiten Bereich gepresst werden, um so eine Reibungskraft bzw. eine Haftreibung zu vergrößern.

Optional ist das Verbindungsmaterial als ein Garn oder als ein Band ausgebildet. Bei dem Garn kann es sich um ein linienförmiges Gebilde handeln. Das Band kann eine Flächenstruktur, beispielsweise ein Gewebe oder ein Vlies, sein.

Ausführungsbeispiele beziehen sich auch auf ein Verfahren zum Verbinden einer ersten Verbindungskomponente mit einer zweiten Verbindungskomponente. Dabei weist die erste Verbindungskomponente einen ersten Bereich und die zweite Verbindungskomponente einen zweiten Bereich auf. Das Verfahren umfasst ein Aufbringen eines Verbindungsmaterials an dem ersten Bereich. Das Verbindungsmaterial weist Fasern auf und ist ausgebildet,um basierend auf den Fasern ein Fluid aufzunehmen und dadurch aufzuquellen. Das Verfahren umfasst ein Umschließen des ersten Bereichs durch den zweiten Bereich. Das Verfahren umfasst weiter ein Einbringen des Fluids in das Verbindungsmaterial, um so durch das Verbindungsmaterial eine Verbindung zwischen der ersten Verbindungskomponente und der zweiten Verbindungskomponente zu bewirken.

Das Umschließen kann beispielsweise ein Einstecken, Einführen oder Einschlie-ßen umfassen. Das Einbringen des Fluids kann passiv erfolgen, insbesondere durch Absorption aus einer Umgebung der Verbindungsvorrichtung oder aus der ersten und/oder zweiten Verbindungskomponente. Das Einbringen des Fluids kann aber auch aktiv erfolgen, etwa durch Tränken des Verbindungsmaterials oder Einspritzen in das Verbindungsmaterial.

Optional erfolgt das Einbringen des Fluids zumindest teilweise durch Absorption des Fluids aus der ersten Verbindungskomponente, der zweiten Verbindungskomponente und/oder aus einer Umgebung der ersten und/oder zweiten Verbindungskomponente.

Wichtige Aspekte der vorgestellten Verbindungsvorrichtung sowie des vorgestellten Verfahrens lassen sich auch wie folgt zusammenfassen.

Bau- oder Konstruktionselemente wie z.B. Rohre und Hülsen aus Papier haben viele konstruktive Vorteile. Verbindungen solcher Elemente werden im Stand der Technik häufig mit Klebstoffen hergestellt. Eine allgemeine Herausforderung insbesondere bei Verbindungskomponenten aus Papier besteht darin, die Verbindungskomponenten bzw. die Verbindung trocken zu halten, etwa, um einen ausreichenden Reibkraftschluss zu gewährleisten.

Die Verbindungsvorrichtung kann als Verbindungsmaterial zwischen den Verbindungskomponenten ein Superabsorberpapier aufweisen. Im Stand der Technik werden Superabsorber in Hygieneartikeln oder zur Ummantelung von Tiefseekabeln eingesetzt. Superabsorber können der Umgebungsluft, zum anderen aber auch umgebendem Papier Wasser entziehen und quellen dabei auf. Auch unter Druck geben sie ein aufgenommenes Fluid nicht leicht wieder ab. Zu einer Herstellung des Superabsorberpapiers kann Superabsorber in ein Papier eingearbeitet werden, das weiter beispielsweise zu einem Garn versponnen werden kann.

Das Verbindungsmaterial kann somit etwa ein Superabsorberpapier sein, das in einen Spalt zwischen den Verbindungskomponenten bzw. der Verbindung gebracht wird. Das Absorbieren des Fluids und das Aufquellen können zu einem Reibkraftschluss führen. Das Aufquellen kann unter anderem durch eine Wahl des Superabsorbers beeinflusst werden. Zudem kann es leichter sein, eine Verbindung feucht zu halten, als sie trocken zu halten. Eine Verbindungskomponenten kann beispielsweise mit dem Superabsorberpapier umwickelt werden, vergleichbar mit einem Abdichten von Wasserleitungen mit Teflonband.

Die vorgestellte Verbindungsvorrichtung bzw. das vorgestellte Verfahren bieten weiter folgende Vorteile.

Die Verbindung der Verbindungsvorrichtung kann auch bei Feuchteschwankungen halten. Verbindungen der vorgestellten Art sind wieder lösbar, beispielsweise, indem das Verbindungsmaterial (z.B. das Superabsorberpapier) etwa mit einem Heißluftfön getrocknet wird. Zudem ist die Verbindungsvorrichtung sehr schnell nach dem Verbinden der Verbindungskomponenten belastbar, anders als bei Klebstoffen, die nach der Applikation trocknen müssen. Die Verbindung der Verbindungsvorrichtung bleibt flexibel und wird nicht, wie beim Aushärten eines Klebstoffs, spröde. Eine Recyclingfähigkeit insbesondere von Verbindungskomponenten oder Verbindungsbereichen aus Papier sowie ggf. der ganzen Verbindungsvorrichtung kann erhalten bleiben. Dies kann eine Nachhaltigkeit erhöhen. In einigen Ausführungsbeispielen kann die ganze Verbindungsvorrichtung lediglich polymerfreie Naturstoffe aufweisen. Es sind nur sehr wenige und schnelle Arbeitsschritte nötig, um die Verbindung herzustellen.

### KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt eine Verbindungsvorrichtung gemäß der vorliegenden Erfindung.
- Fig. 2: zeigt ein Ausführungsbeispiel eines Verbindungsmaterials.
- Fig. 3: zeigt ein weiteres Ausführungsbeispiel des Verbindungsmaterials.
- Fig. 4: zeigt ein weiteres Ausführungsbeispiel der Verbindungsvorrichtung.
- Fig. 5: zeigt weitere Ausführungsbeispiele der Verbindungsvorrichtung.
- Fig. 6: zeigt Schritte eines Verfahrens gemäß der vorliegenden Erfindung.

### DETAILLIERTE BESCHREIBUNG

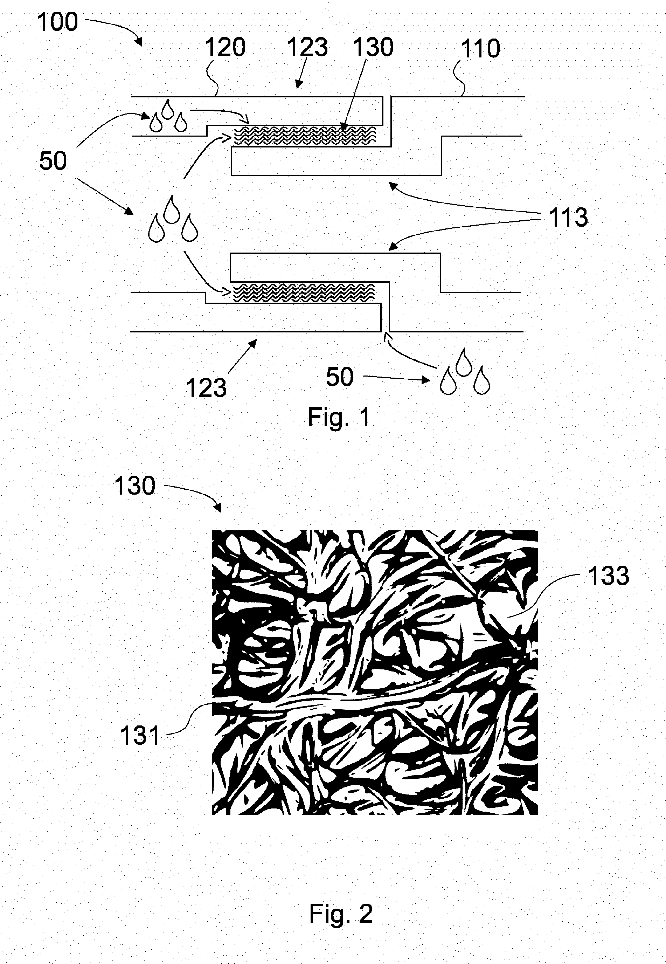

**Fig. 1** zeigt schematisch einen Querschnitt durch eine Verbindungsvorrichtung 100 der vorgestellten Art. Die Verbindungsvorrichtung 100 umfasst eine erste Verbindungskomponente 110 mit einem ersten Bereich 113, eine zweite Verbindungskomponente 120 mit einem zweiten Bereich 123 und ein Verbindungsmaterial 130, das Fasern aufweist, um basierend auf den Fasern ein Fluid 50 aufzunehmen und dadurch aufzuquellen. Dabei umschließt der zweite Bereich 123 den ersten Bereich 113, und das Verbindungsmaterial 130 ist zwischen dem ersten Bereich 113 und dem zweiten Bereich 123 das Verbindungsmaterial 130 angeordnet.

Der erste Bereich 113 und der zweite Bereich 123 sind hier dünner bzw. mit einem anderen Durchmesser dargestellt als ein jeweiliger Rest der ersten Verbindungskomponente 110 und der zweiten Verbindungskomponente 120. In anderen Ausführungsbeispielen sind der erste Bereich 113 und/oder der zweite Bereich 123 allerdings nicht von dem Rest der jeweiligen Verbindungskomponente 110, 120 zu unterscheiden. Der erste Bereich 113 und/oder der zweite Bereich 123 können allein dadurch ausgezeichnet sein, dass der zweite Bereich 123 den ersten Bereich 113 umschließt.

Ein Raum zwischen dem ersten Bereich 113 und dem zweiten Bereich 123, in dem das Verbindungsmaterial 130 angeordnet ist, kann im Verhältnis zu einer Ausdehnung des ersten und zweiten Bereichs 131, 123 sehr klein gewählt werden.

Nach einem Einbringen des Fluids 50 bewirkt das Verbindungsmaterial 130 durch sein Aufquellen eine Verbindung zwischen der ersten Verbindungskomponente 110 und der zweiten Verbindungskomponente 120.

Das Fluid 50 kann aktiv in das Verbindungsmaterial 130 eingebracht werden. In Ausführungsbeispielen wird das Verbindungsmaterial 130 zunächst um den ersten Bereich 113 aufgetragen und dann mit dem Fluid 50 getränkt. Anschließend wird der ersten Bereich 113 zügig mit dem zweiten Bereich 123 umschlossen, bevor das Verbindungsmaterial 130 vollständig aufgequollen ist. Das Umschließen kann beispielsweise durch Einstecken des ersten Bereichs 113 in den zweiten Bereich 123 erfolgen. Das Umschließen kann auch auf einem Umformen des zweiten Bereichs 123 basieren.

Das Fluid 50 kann alternativ oder zusätzlich passiv in das Verbindungsmaterial 130 eingebracht werden. In Ausführungsbeispielen nimmt das Verbindungsmaterial 130 das Fluid 50 beispielsweise aus der ersten Verbindungskomponente 110 und/oder aus der zweiten Verbindungskomponente 120 auf. Das Verbindungsmaterial 130 kann das Fluid 50 auch aus einer (äußeren oder inneren) Umgebung der Verbindungsvorrichtung 100 aufnehmen.

Die erste Verbindungskomponente 110 und/oder die zweite Verbindungskomponente 120 können Papier oder einen anderen cellulosehaltigen Vliesstoff umfassen oder auch ganz daraus bestehen.

Die Verbindung kann eine reibkraftschlüssige Verbindung, eine formschlüssige Verbindung oder eine Mischung aus reibkraftschlüssiger und formschlüssiger Verbindung sein.

Das Verbindungsmaterial 130 kann auch eine abdichtende Wirkung gegenüber dem Fluid 50 oder gegenüber einem anderen Fluid haben; das Verbindungsmaterial 130 kann also ausgebildet sein, um die Verbindung bzw. ein Inneres oder Äußeres der Verbindungsvorrichutng 100 gegenüber dem Fluid 50 oder gegenüber dem anderen Fluid abzudichten.

**Fig. 2** zeigt ein Ansicht eines Ausführungsbeispiels des Verbindungsmaterials 130. In diesem Ausführungsbeispiel umfasst das Verbindungsmaterial 130 die Fasern 131 in ungeordnetem Zustand. Die Fasern 131 können insbesondere Papier-, Cellulose- oder sonstige Naturfasern sein. Die Fasern 131 können ausgebildet sein, um das Fluid 50 zu absorbieren und dabei aufzuquellen. Das Verbindungsmaterial 130 umfasst einen Zusatzstoff 133, der durch die Fasern 131 gehalten wird und ausgebildet ist, um das Fluid 50 aufzunehmen und dabei aufzuquellen. Bei dem Zusatzstoff 133 kann es sich insbesondere um einen Superabsorber handeln. Die Fasern 131 können eine zusammenhängende Matrix bilden, in die der Zusatzstoff 133 eingebettet ist.

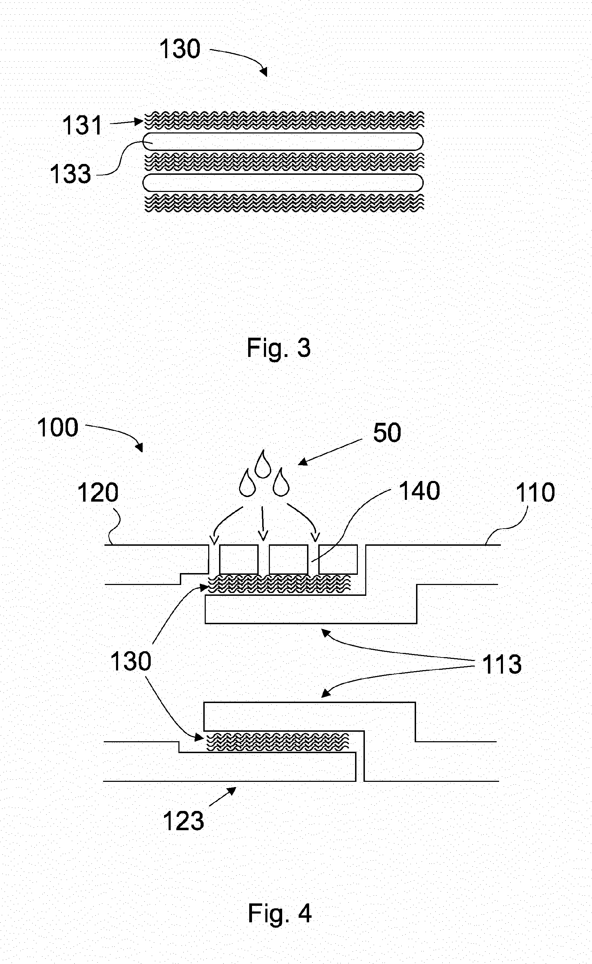

**Fig. 3** zeigt ein weiteres Ausführungsbeispiel des Verbindungsmaterials 130. Das Verbindungsmaterial 130 umfasst die Fasern 131 und einen Superabsorber 133. Die Fasern 131 und der Superabsorber 133 sind in abwechselnden Zonen angeordnet. Insbesondere sind die Fasern 131 und der Superabsorber 133 hier in abwechselnden Schichten angeordnet.

**Fig. 4** zeigt ein weiteres Ausführungsbeispiel der Verbindungsvorrichtung 100. Hier weist der zweite Bereich 123 mehrere Öffnungen 140 auf, die ausgebildet sind, um das Fluid 50 in das Verbindungsmaterial 130 einzubringen. Die Öffnungen 140 können als eine siebartige Struktur im zweiten Bereich 123 ausgebildet sein. Jede einzelne Öffnung 140 kann eine Form aufweisen, die ein Aufnehmen des Fluids 50 beispielsweise aus der äußeren Umgebung der Verbindungsvorrichtung 100 fördert und/oder ein Verdunsten des Fluids 50 in die äußere Umgebung verhindert.

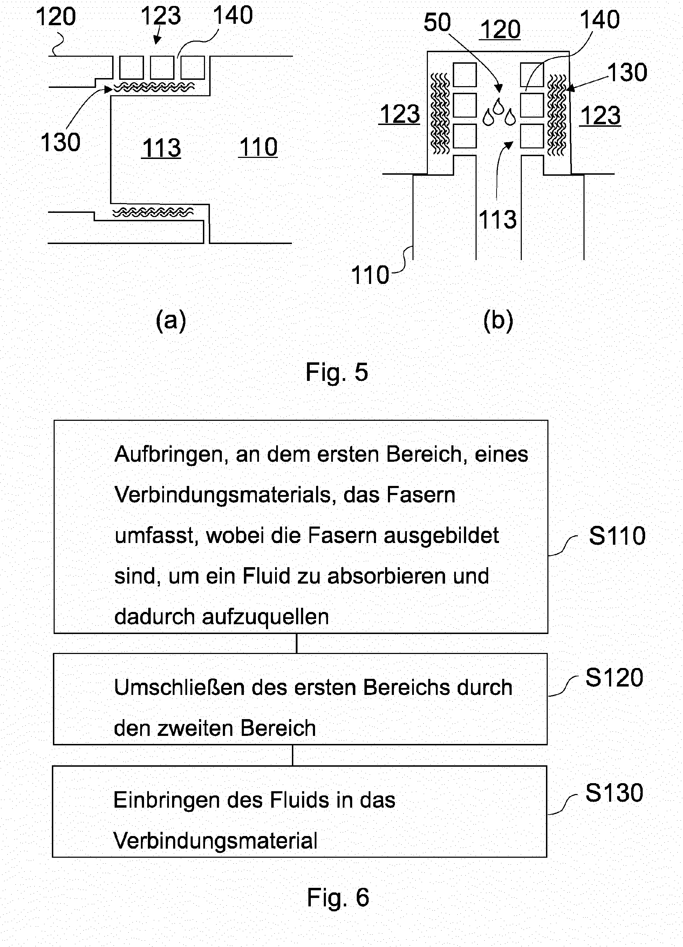

**Fig. 5** zeigt weitere Ausführungsbeispiele der Verbindungsvorrichtung 100. In einem Teil (a) der Figur ist die erste Verbindungskomponente 110 massiv ausgeführt. In einem Teil (b) der Figur ist die zweite Verbindungskomponente 120 massiv ausgeführt, und die erste Verbindungskomponente 110 weist im ersten Bereich 113 Öffnungen auf, die ausgebildet sind, um das Fluid 50 in das Verbindungsmaterial 130 einzubringen.

**Fig. 6** zeigt Schritte eines Verfahrens zum Verbinden einer ersten Verbindungskomponente 110 mit einer zweiten Verbindungskomponente 120, wobei die erste Verbindungskomponente 110 einen ersten Bereich 113 und die zweite Verbindungskomponente 120 einen zweiten Bereich 123 aufweist. Das Verfahren umfasst ein Aufbringen S110 eines Verbindungsmaterials 130, das Fasern 131 umfasst, z.B an dem ersten Bereich 113, wobei die Fasern 131 ausgebildet sind, um ein Fluid 50 zu absorbieren und dadurch aufzuquellen. Das Verfahren umfasst ein Umschließen S120 des ersten Bereichs 113 durch den zweiten Bereich 123. Das Verfahren umfasst ein Einbringen S130 des Fluids 50 in das Verbindungsmaterial 130, um so durch das Verbindungsmaterial 130 eine Verbindung zwischen der ersten Verbindungskomponente 110 und der zweiten Verbindungskomponente 120 zu bewirken. Das Einbringen S130 des Fluids 50 kann zumindest teilweise durch Absorption des Fluids 50 aus der ersten Verbindungskomponente 110, der zweiten Verbindungskomponente 120 oder einer (äußeren oder inneren) Umgebung der Verbindungskomponenten 110, 120 erfolgen.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 50: Fluid
- 100: Verbindungsvorrichtung
- 110: erste Verbindungskomponente
- 113: erster Bereich
- 120: zweite Verbindungskomponente
- 123: zweiter Bereich
- 130: Verbindungsmaterial
- 131: Fasern
- 133: Zusatzstoff bzw. Superabsorber
- 140: Öffnung
- S110, S120, S130: Verfahrensschritte

## Patentansprüche

1. Verbindungsvorrichtung (100), umfassend:
eine erste Verbindungskomponente (110) mit einem ersten Bereich (113);
eine zweite Verbindungskomponente (120) mit einem zweiten Bereich (123); und
ein Verbindungsmaterial (130), das Fasern (131) aufweist, um basierend auf den Fasern (131) ein Fluid (50) aufzunehmen und dadurch aufzuquellen;
wobei der zweite Bereich (123) den ersten Bereich (113) umschließt, und
wobei zwischen dem ersten Bereich (113) und dem zweiten Bereich (123) das Verbindungsmaterial (130) angeordnet ist,
so dass das Verbindungsmaterial (130) nach einem Einbringen des Fluids (50) eine Verbindung zwischen der ersten Verbindungskomponente (110) und der zweiten Verbindungskomponente (120) bewirkt.

2. Die Verbindungsvorrichtung (100) nach Anspruch 1, wobei die Verbindung eine der folgenden ist:
- eine reibkraftschlüssige Verbindung,
- eine formschlüssige Verbindung,
- eine Mischung aus reibkraftschlüssiger und formschlüssiger Verbindung.

3. Die Verbindungsvorrichtung (100) nach einem der vorhergehenden Ansprüche, wobei die Fasern (131) folgende Fasern umfassen:
- Cellulosefasern, insbesondere Papierfasern,
- Textilfasern.

4. Die Verbindungsvorrichtung (100) nach einem der vorhergehenden Ansprüche, wobei das Fluid (50) zumindest eines der Folgenden aufweist:
- Wasser oder ein anders hydrophiles Fluid (50),
- ein Öl.

5. Die Verbindungsvorrichtung (100) nach einem der vorhergehenden Ansprüche, wobei der erste Bereich (113) und/oder der zweite Bereich (123) zumindest eines der Folgenden aufweisen:
- eine Form einer Röhre,
- eine Form eines Zylinders,
- ein Gewinde,
- eine Form eines Keils.

6. Die Verbindungsvorrichtung (100) nach einem der vorhergehenden Ansprüche, wobei der erste Bereich (113) und/oder der zweite Bereich (123) zumindest eines der folgenden Materialien aufweisen:
- ein Papier oder ein anderes Vlies aus Cellulosefasern,
- ein Holz,
- ein Metall,
- Chemiefasern,
- Kunstfasern,
- eine Keramik,
- einen Kunststoff.

7. Die Verbindungsvorrichtung (100) nach einem der vorhergehenden Ansprüche, wobei der erste Bereich (113) und/oder der zweite Bereich (123) zumindest eine Öffnung aufweisen, die ausgebildet ist, um das Fluid (50) in das Verbindungsmaterial (130) einzubringen.

8. Die Verbindungsvorrichtung (100) nach einem der vorhergehenden Ansprüche, wobei das Verbindungsmaterial (130) einen Superabsorber (133) umfasst, der ausgebildet ist, um das Fluid (50) zu absorbieren.

9. Die Verbindungsvorrichtung (100) nach Anspruch 8, wobei in dem Verbindungsmaterial (130) die Fasern (131) und der Superabsorber (133) in abwechselnden Zonen angeordnet sind.

10. Die Verbindungsvorrichtung (100) nach Anspruch 8 oder Anspruch 9, wobei in dem Verbindungsmaterial (130) der Superabsorber (133) in einer Matrix aus Fasern (131) eingebettet ist.

11. Die Verbindungsvorrichtung (100) nach einem der vorhergehenden Ansprüche, wobei das Verbindungsmaterial (130) in einer der folgenden Formen ausgebildet ist:
- als ein Garn,
- als ein Band.

12. Ein Verfahren zum Verbinden einer ersten Verbindungskomponente (110) mit einer zweiten Verbindungskomponente (120), wobei die erste Verbindungskomponente (110) einen ersten Bereich (113) und die zweite Verbindungskomponente (120) einen zweiten Bereich (123) aufweist, das Verfahren umfasst:
Aufbringen (S110), an dem ersten Bereich (113), eines Verbindungsmaterials (130), das Fasern (131) umfasst, wobei die Fasern (131) ausgebildet sind, um ein Fluid (50) zu absorbieren und dadurch aufzuquellen;
Umschließen (S120) des ersten Bereichs (113) durch den zweiten Bereich (123); und
Einbringen (S130) des Fluids (50) in das Verbindungsmaterial (130),
um so durch das Verbindungsmaterial (130) eine Verbindung zwischen der ersten Verbindungskomponente (110) und der zweiten Verbindungskomponente (120) zu bewirken.

13. Das Verfahren nach Anspruch 11, wobei das Einbringen (S130) des Fluids (50) zumindest teilweise durch Absorption des Fluids (50) aus zumindest einem der Folgenden erfolgt:
- der ersten Verbindungskomponente (110),
- der zweiten Verbindungskomponente (120),
- einer Umgebung.
